# EUROPÄISCHE PATENTSCHRIFT

(11) **EP 3 740 377 B1**
(45) Veröffentlichungstag und Bekanntmachung des Hinweises auf die Patenterteilung: **10.05.2023**
(21) Anmeldenummer: 19700929.3
(22) Anmeldetag: 17.01.2019
(51) Int. Cl.: B29C 70/44, B29C 70/32, B29L 31/08, F03D 1/06

(54) **VERFAHREN ZUM HERSTELLEN VON KOMPONENTEN EINER WINDENERGIEANLAGE, INSBESONDERE EINES WINDENERGIEANLAGEN-ROTORBLATTES**
METHOD FOR PRODUCING COMPONENTS OF A WIND TURBINE, IN PARTICULAR A ROTOR BLADE OF A WIND TURBINE
PROCÉDÉ DE FABRICATION DE COMPOSANTS D'UNE ÉOLIENNE, EN PARTICULIER D'UNE PALE DE ROTOR D'ÉOLIENNE

(30) Priorität: 17.01.2018 DE 102018100941
(43) Veröffentlichungstag der Anmeldung: 25.11.2020
(73) Patentinhaber: Wobben Properties GmbH, 26607 Aurich (DE)
(72) Erfinder: STOPS, Florian, 39418 Staßfurt, Neundorf (DE); BETHGE, Torsten, 39124 Magdeburg (DE)
(74) Vertreter: Eisenführ Speiser
(86) Internationale Anmeldenummer: PCT/EP2019/051106
(87) Internationale Veröffentlichungsnummer: WO 2019/141758

(56) Entgegenhaltungen:
- WO-A1-03/035380
- DE-A1- 10 304 044

## Beschreibung

Die vorliegende Erfindung betrifft ein Verfahren zum Herstellen von Komponenten einer Windenergieanlage.

Komponenten von Windenergieanlagen wie beispielsweise Teile der Rotorblätter der Windenergieanlage können mit unterschiedlichen Verfahren hergestellt werden. Hierbei können die Teile oder Elemente der Windenergieanlage zumindest teilweise in einem Wickelverfahren gewickelt werden. Hierbei werden textile Gelege um einen konturgebenden Kern gewickelt. Die Gelege können mit Harz getränkt sein, können als Prepreg ausgestaltet sein oder können als trockene Gelege verwendet werden.

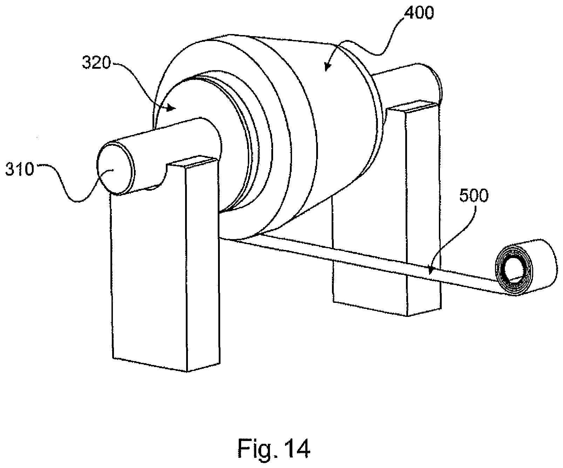

Fig. 14 zeigt eine schematische Darstellung des Wickelverfahrens. Hierbei kann ein Wickelkern 320 auf einer Welle 310 platziert sein. Die Welle 310 wird in Rotation versetzt, so dass auch der Wickelkern 320 rotiert. Ein Wickelgelege 500 kann dann auf den Wickelkern 320 aufgewickelt werden, um ein gewünschtes Bauteil 400 zu erhalten. Durch dieses Wickelverfahren kann erreicht werden, dass die Außenkontur des Wickelkerns 320 auf die Innenkontur bzw. die Innenseite des Bauteils übertragen wird.

Dies kann jedoch dazu führen, dass eine Außengeometrie des Bauteils nicht die gewünschte Außenkontur erhält.

DE 27 19 773 beschreibt ein Verfahren zum Herstellen eines Rohkörpers. Ein Fasermaterial wird auf einen Kernform gewickelt und ein Außenmantel wird außen angebracht. Anschließend wird Luft abgesaugt und ein Imprägnierharz wird eingepresst. Der Rohkörper wird dann ausgehärtet und die Kernform wird aus dem Hohlkörper entfernt. Anschließend kann der Außenmantel mechanisch abgetragen werden.

In der prioritätsbegründenden deutschen Patentanmeldung hat das Deutsche Patent-und Markenamt die folgenden Dokumente recherchiert: DE 37 16 335A1, DE 10 2010 026 018 A1, DE 10 2015 204 490 A1, DE 10 2016 110 848 A1 und EP 2 361 752 A1.

DE 103 04 044 A1 zeigt ein Verfahren zum Herstellen von Rohren.

WO 03/035380 A1 zeigt ein Verfahren zum Herstellen eines Rotorblattes.

Es ist eine Aufgabe der vorliegenden Erfindung, die vorstehend angeführten Nachteile zu beheben. Es ist insbesondere eine Aufgabe der vorliegenden Erfindung, ein Verfahren zur effektiveren Herstellung von Komponenten einer Windenergieanlage vorzusehen. Es ist insbesondere eine Aufgabe der vorliegenden Erfindung, ein Verfahren zum Herstellen von Komponenten einer Windenergieanlage vorzusehen, bei welchem auch eine Außengeometrie des herzustellenden Bauteils ausreichend eben bzw. glatt wird.

Diese Aufgabe wird durch ein Verfahren zum Herstellen eines Bauteils einer Windenergieanlage nach Anspruch 1 gelöst.

Somit wird ein Verfahren zum Herstellen eines Bauteils einer Windenergieanlage, insbesondere eines Windenergieanlagen-Rotorblattes, vorgesehen. Ein Wickelkern wird auf einer drehbaren Welle vorgesehen. Eine Vakuumfolie wird auf dem Wickelkern platziert. Ein herzustellendes Bauteil wird auf der Vakuumfolie mittels eines Wickelgeleges gewickelt. Eine Außenform wird um das gewickelte Bauteil platziert. Ein Vakuuminfusionsverfahren wird durchgeführt und das infundierte Harz wird ausgehärtet. Hierbei wird ein Vakuum zwischen der Vakuumfolie auf dem Wickelkern und der Innenseite der Außenform erzeugt, so dass das Gelege mittels des Vakuuminfusionsverfahrens gegen die Innenseite der Außenform gepresst wird, so dass eine glatte Außenoberfläche des gewickelten Teils erreicht wird.

Der Wickelkern wird entfernt, bevor das Vakuuminfusionsverfahren durchgeführt wird. Dies ist vorteilhaft, weil damit der Wickelkern bereits anderweitig verwendet werden kann.

Gemäß einem Aspekt der vorliegenden Erfindung ist die Außenform mehrteilig ausgestaltet.

Gemäß einem weiteren Aspekt der vorliegenden Erfindung kann das fertige gewickelte Bauteil getrennt werden, um getrennte Einzelsegmente vorzusehen.

Die Erfindung betrifft den Gedanken, ein Verfahren zum Herstellen von Komponenten einer Windenergieanlage, insbesondere eines Rotorblatts einer Windenergieanlage, vorzusehen. Dazu wird ein Wickelkern vorgesehen und ein Wickelgelege wird auf den Kern aufgewickelt. Anschließend wird eine Außenform auf dem gewickelten Gelege platziert und ein Vakuum wird erzeugt, so dass das Gelege mittels des Vakuuminfusionsverfahrens gegen die Innenseite der Außenform gepresst wird, so dass eine glatte Außenoberfläche des gewickelten Teils erreicht wird.

Der Wickelkern wird vor dem Vakuuminfusionsverfahren entfernt, so dass der Wickelkern zwischenzeitlich weiterverwendet werden kann. Durch das erfindungsgemäße Verfahren können Wellen und Falten an der Außenseite bzw. Außenoberfläche des herzustellenden Bauteils vermieden werden, da auf Grund des Vakuuminfusionsverfahrens das Gelege gegen die Außenform gedrückt und damit gestrafft wird.

Gemäß einem Aspekt der vorliegenden Erfindung kann die Außenform mehrteilig ausgestaltet sein, so dass das herzustellende Bauteil leicht entfernt werden kann.

Gemäß einem weiteren Aspekt der vorliegenden Erfindung kann das fertige Bauteil in verschiedene Einzelteile getrennt werden.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage,
- Fig. 2: zeigen schematisch verschiedene Schritte bei der Herstellung eines
- bis 9: Bauteils für eine Windenergieanlage,
- Fig. 10: zeigt eine schematische Darstellung einer Außenform, welche von dem Wickelkern entfernt wurde,
- Fig. 11: zeigt eine schematische Darstellung eines gefertigten Bauteils,
- Fig. 12: zeigt eine schematische Darstellung des Bauteils sowie einer mehrteiligen Außenform,
- Fig. 13: zeigt eine schematische Darstellung eines mehrteiligen Bauteils, und
- Fig. 14: zeigt eine schematische Darstellung der Herstellung eines Bauteils gemäß dem Stand der Technik.

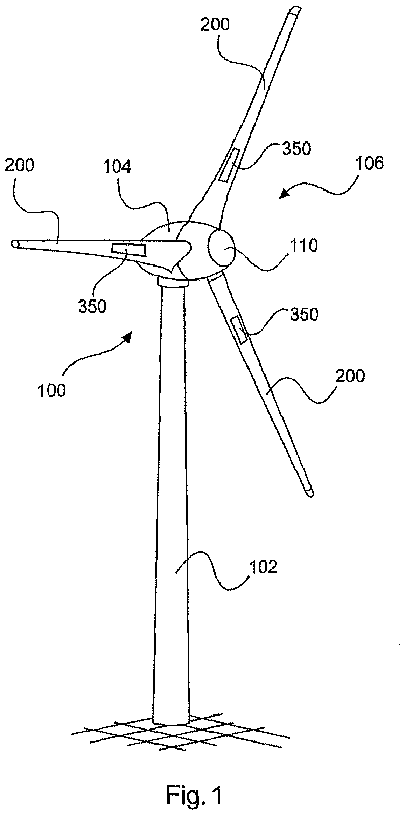

Fig. 1 zeigt eine schematische Darstellung einer Windenergieanlage Die Windenergieanlage 100 weist einen Turm 102 und eine Gondel 104 auf. An der Gondel 104 ist ein Rotor 106 mit drei Rotorblättern 200 und einem Spinner 110 vorgesehen. Der Rotor 106 wird in Betrieb durch den Wind in eine Drehbewegung versetzt und treibt einen Generator in der Gondel 104 an, um elektrische Energie zu erzeugen. Das Rotorblatt 200 weist mindestens ein Bauteil 350 auf, welches erfindungsgemäß hergestellt wird.

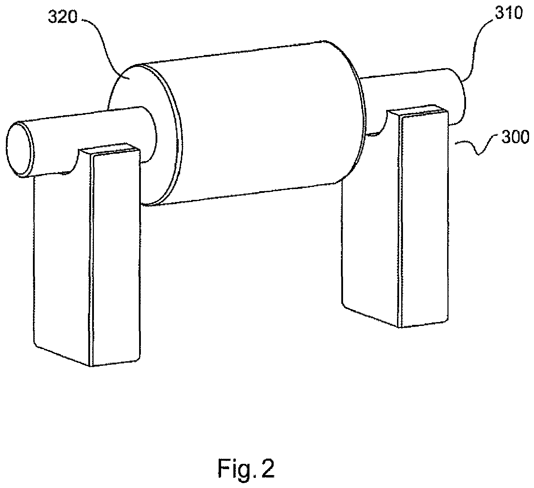

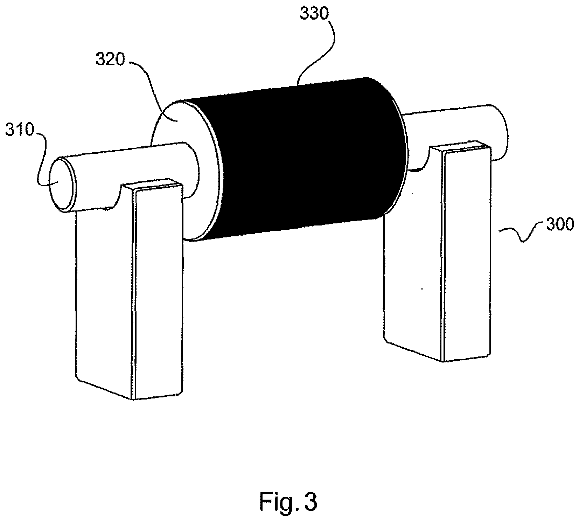

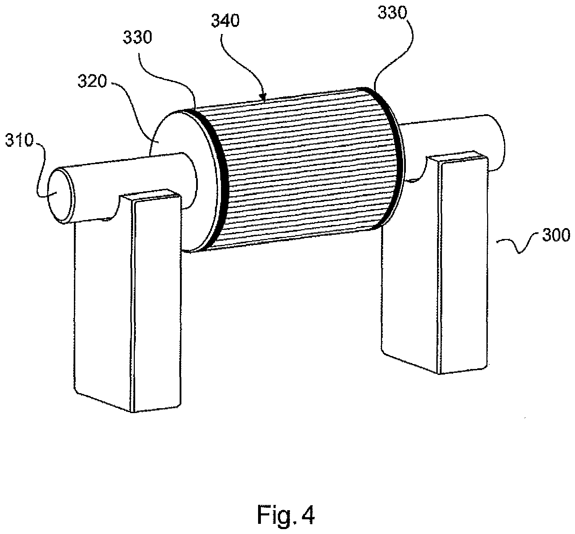

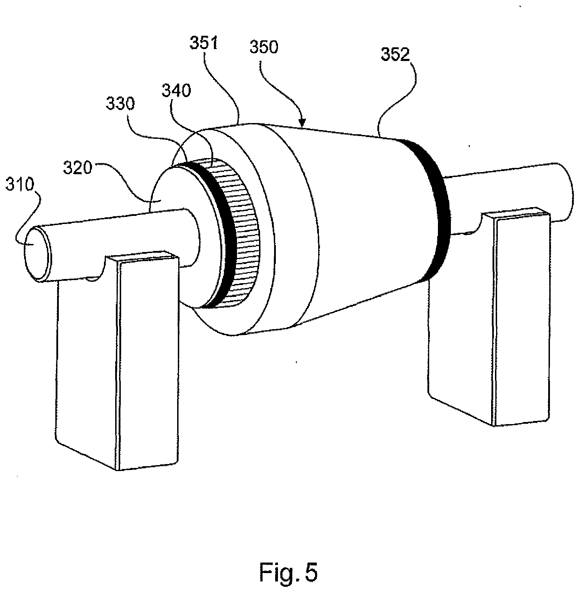

Fig. 2 bis 9 zeigen schematisch verschiedene Schritte bei der Herstellung eines Bauteils für eine Windenergieanlage. In Fig. 2 ist eine Wickeleinheit 300 mit einer Welle 310 und einem Wickelkern 320 gezeigt. Durch Drehen der Welle 310 wird auch der Wickelkern rotiert. Wie in Fig. 3 gezeigt, kann eine Vakuumfolie 330 um den Wickelkern 320 vorgesehen sein. Anschließend kann wie in Fig. 4 gezeigt ein Fließgitteraufbau 340 um die Vakuumfolie 330 vorgesehen sein.

Ein Gelege wird um den Wickelkern 320 mit der Vakuumfolie 330 und dem Fließgitteraufbau 340 umwickelt, so dass ein herzustellendes Bauteil 350 gewickelt wird. Das Bauteil 350 kann ein erstes Ende 351 und ein zweites Ende 352 aufweisen, wobei das zweite Ende 352 zumindest teilweise kegelförmig ausgestaltet sein kann.

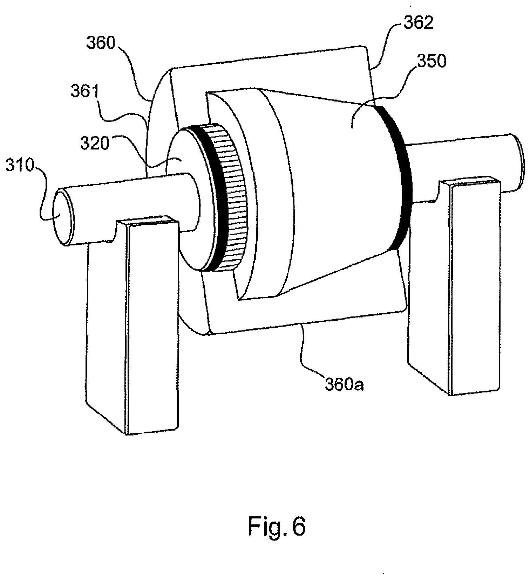

Wie in Fig. 6 zu sehen, wird eine Außenform 360 um den Wickelkern 320 und das gewickelte Bauteil 350 platziert. Da die Außenform mehrteilig ist, kann zunächst eine erste Halbschale der Außenform 360 platziert werden. Anschließend kann eine zweite Halbschale das restliche Bauteil 350 umgeben.

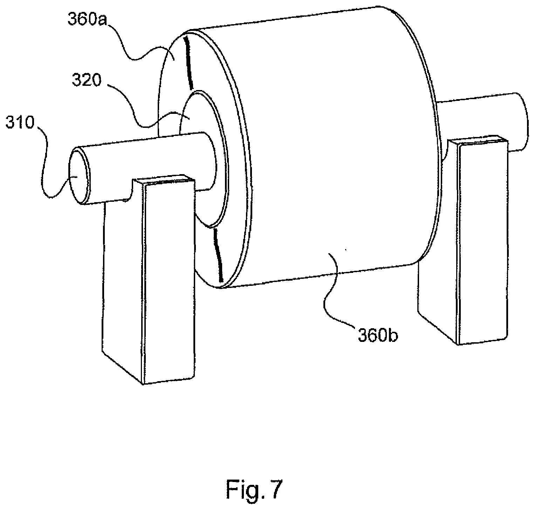

In Fig. 7 ist gezeigt, dass die beiden Halbschalen, welche die Außenform ausbilden, um das Bauteil 350 herum platziert sind. Diese sind zueinander vakuumdicht verschlossen. Die Vakuumfolie 330 wird mit der Außenform vakuumdicht verschlossen und bildet damit den Infusionsraum, in welchen das Harz eingeführt werden kann.

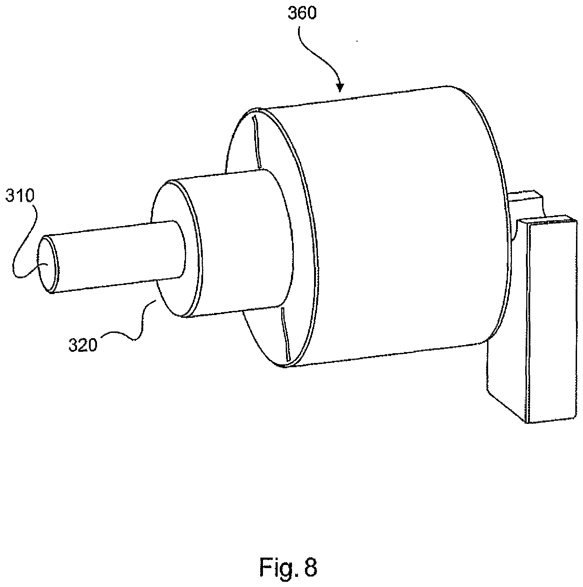

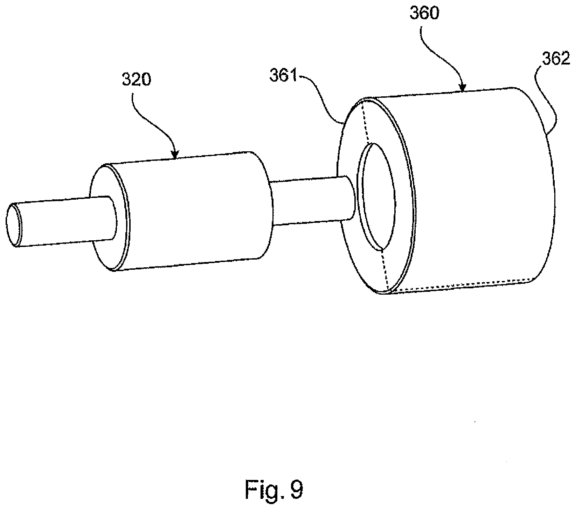

Wie in Fig. 8 und 9 zu sehen, kann der Wickelkern 320 mit der Welle 310 komplett entfernt werden, so dass lediglich die Außenform 360 mit dem sich darin befindlichen Bauteil 350 übrig bleibt.

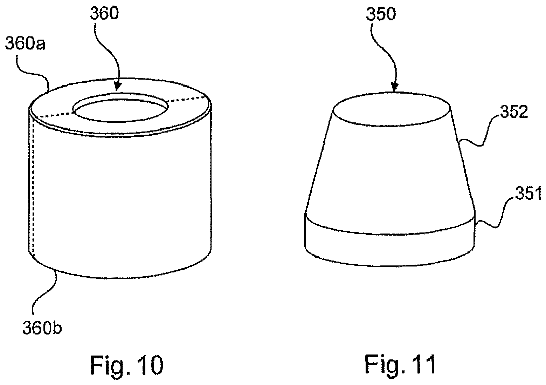

Wie in Fig. 10 zu sehen, kann die Außenform mit dem Bauteil entfernt werden und ein Vakuuminfusionsverfahren kann durchgeführt werden, um das Gelege des gewickelten Bauteils mit Harz zu infundieren. Anschließend kann das Harz ausgehärtet werden, so dass am Ende das fertige Bauteil 350 wie in Fig. 11 zu sehen erhalten wird.

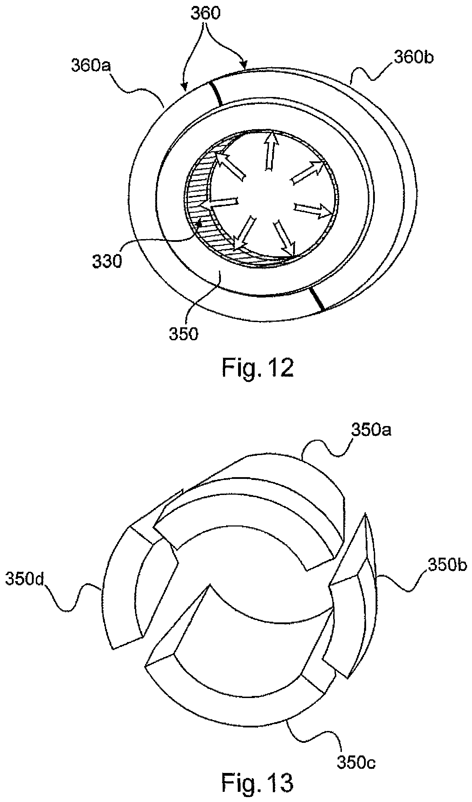

Wie in Fig. 12 zu sehen, kann die Außenform mindestens zweiteilig ausgestaltet sein. Optional kann die Außenform auch mehrteilig ausgestaltet sein.

Wie in Fig. 13 zu sehen, kann das Bauteil 350 mehrteilig ausgestaltet sein, indem das gewickelte Bauteil in Einzelteile getrennt wird.

Gemäß der Erfindung wird somit eine Vakuumfolie 330 auf dem Wickelkern 320 platziert. Diese wird zur Außenform abgedichtet, die, wie oben beschrieben, in sich vakuumdicht ist. Eine weitere Vakuumfolie kann optional zwischen dem Bauteil und der Außenform vorgesehen sein, so dass ein Vakuum zwischen der Vakuumfolie und der Außenform erzeugt werden kann. Dies kann dazu führen, dass das gewickelte Gelege 350 sich nach außen entspannen Der Wickelkern 320 wird entfernt, bevor Harz mittels des Vakuuminfusionsverfahrens in das gewickelte Gelege eindiffundieren kann. Dies ist erfindungsgemäß vorteilhaft, weil damit eine wellen- und faltenfreie Außenkontur des Bauteils erhalten werden kann.

Die Dicke des aufgewickelten Geleges ist typischerweise kleiner als der Abstand zwischen dem Wickelkern und der Innenseite der Außenform, so dass das Gelege gegen eine Innenwand der Außenform gepresst wird und es somit zu einem Spalt zwischen dem Gelege und der äußeren Wand des Wickelkerns 320 kommen kann. Somit wird das Gelege von innen nach außen gestrafft und der Wickelkern 320 kann auf einfache Art und Weise entfernt werden.

Nachdem ein Vakuum zwischen der Vakuumfolie 330 und der Innenseite der Außenform 360 erzeugt worden ist, kann die Außenform 360 vom Wickelkern entfernt werden.

Der Wickelkern 320 kann dann zwischenzeitlich wiederverwendet werden, um ein weiteres Bauteil 350 herzustellen.

Entsprechend der Geometrie der zu wickelnden Form kann die Außenform 360 einteilig ausgestaltet sein. Alternativ dazu kann die Außenform mehrteilig ausgestaltet sein, so dass die Einzelteile der Außenform separat entfernt werden können.

Mit dem erfindungsgemäßen Verfahren können beispielsweise Blattanschlussbereiche eines Windenergieanlagen-Rotorblattes durch Preform-Segmente hergestellt werden. Diese Preform-Segmente können gemäß der Erfindung hergestellt werden. Damit kann vermieden werden, dass die Bauteile Fehler in Form von Falten oder Stauchungen an der Außenkontur aufweisen. Dies wird erfindungsgemäß u. a. durch die Verwendung des Vakuuminfusionsverfahrens erreicht.

Die Erfindung betrifft insbesondere eine Verwendung einer (mehrteiligen) positiven Außenform, um gewickelte Bauteile mit einer definierten Außengeometrie herzustellen.

Das herzustellende Bauteil kann gemäß der Erfindung innere und äußere Flanschaufdickungen, Preform-Segmente und Innenrotorblätter darstellen. Alternativ dazu können Holmkästen mit dem erfindungsgemäßen Verfahren hergestellt werden.

Das erfindungsgemäße Verfahren erlaubt eine effektive und fehlerfreie Herstellung von Rotorblattkomponenten. Insbesondere können Zuschnittkapazitäten und Bauteilformen eingespart werden. Des Weiteren kann die Passgenauigkeit der einzelnen Teile untereinander und zu angrenzenden Formen erheblich verbessert werden.

## Patentansprüche

1. Verfahren zum Herstellen eines Bauteils einer Windenergieanlage, insbesondere eines Windenergieanlagen-Rotorblattes, mit den Schritten:
Vorsehen eines Wickelkerns (320) auf einer drehbaren Welle (310),
Platzieren einer Vakuumfolie (330) auf dem Wickelkern (320),
Wickeln eines herzustellenden Bauteils (350) auf der Vakuumfolie (330) mittels eines Wickelgeleges,
Platzieren einer Außenform (360) um das gewickelte Bauteil (350),
Durchführen eines Vakuuminfusionsverfahrens,
Aushärten des infundierten Harzes, und
Entfernen des Wickelkerns (320), bevor das Vakuuminfusionsverfahren durchgeführt wird,
wobei ein Vakuum zwischen der Vakuumfolie (330) auf dem Wickelkern (320) und einer Innenseite der Außenform (360) erzeugt wird, so dass das aufgewickelte Gelege gegen die Innenseite der Außenform (360) gepresst wird.

2. Verfahren zum Herstellen eines Bauteils einer Windenergieanlage nach Anspruch 1, wobei
die Außenform (360) mehrteilig ausgestaltet ist.

3. Verfahren zum Herstellen eines Bauteils einer Windenergieanlage nach einem der Ansprüche 1 bis 2, ferner mit dem Schritt:
Trennen des fertigen Bauteils (350), um getrennte Einzelsegmente vorzusehen.

## Claims

1. A method of producing a component of a wind turbine, in particular a wind turbine rotor blade, comprising the steps:
providing a winding core (320) on a rotatable shaft (310),
placing a vacuum film (330) on the winding core (320),
winding a component (350) to be produced on the vacuum film (330) by means of a winding scrim,
placing an external mould (360) around the wound component (350),
carrying out a vacuum infusion method, and
curing the infused resin,
removing the winding core (320) before the vacuum infusion method is carried out,
wherein a vacuum is created between the vacuum film (330) on the winding core (320) and an inside of the external mould (360) so that the wound-on scrim is pressed against the inside of the external mould (360).

2. A method of producing a component of a wind turbine according to claim 1 wherein
the external mould (360) is of a multi-part configuration.

3. A method of producing a component of a wind turbine according to one of claims 1 to 2 and further comprising the step:
severing the finished component (350) to provide separate individual segments.

## Revendications

1. Procédé de fabrication d'un composant d'une éolienne, en particulier d'une pale de rotor d'éolienne, avec les étapes :
de prévision d'un axe d'enroulement (320) sur un arbre rotatif (310),
de placement d'un film sous vide (330) sur l'axe d'enroulement (320),
d'enroulement d'un composant (350) à fabriquer sur le film sous vide (330) au moyen d'une nappe d'enroulement,
de placement d'un moule extérieur (360) autour du composant (350) enroulé,
de mise en oeuvre d'un procédé de fusion sous vide,
de durcissement d'une résine perfusée, et
de retrait de l'axe d'enroulement (320) avant que le procédé de fusion sous vide ne soit mis en oeuvre,
dans lequel un vide est généré entre le film sous vide (330) sur l'axe d'enroulement (320) et un côté intérieur du moule extérieur (360) de telle sorte que la nappe enroulée est pressée contre le côté intérieur du moule extérieur (360).

2. Procédé de fabrication d'un composant d'une éolienne selon la revendication 1, dans lequel
le moule extérieur (360) est configuré en plusieurs parties.

3. Procédé de fabrication d'un composant d'une éolienne selon l'une quelconque des revendications 1 à 2, en outre avec l'étape :
de séparation du composant (350) fini pour prévoir des segments individuels séparés.
